(19) Europäisches Patentamt

European Patent Office

Office européen des brevets

(11) **EP 0 978 530 B1**

(12) **EUROPÄISCHE PATENTSCHRIFT**

(45) Veröffentlichungstag und Bekanntmachung des Hinweises auf die Patenterteilung:
**01.10.2003   Patentblatt 2003/40**

(51) Int Cl.$^7$: **C08L 21/00**, C08L 19/00

(21) Anmeldenummer: **99114559.0**

(22) Anmeldetag: **24.07.1999**

(54) **Kautschukmischung**

Rubber composition

Composition de caoutchouc

(84) Benannte Vertragsstaaten:
**AT BE CH CY DE DK ES FI FR GB GR IE IT LI LU MC NL PT SE**

(30) Priorität: **01.08.1998   DE 19834802**

(43) Veröffentlichungstag der Anmeldung:
**09.02.2000   Patentblatt 2000/06**

(73) Patentinhaber: **Continental Aktiengesellschaft
30165 Hannover (DE)**

(72) Erfinder:
• **Obrecht, Werner, Dr.
47447 Moers (DE)**
• **Scholl, Thomas, Dr.
51469 Bergisch Gladbach (DE)**
• **Wendling, Peter
51357 Leverkusen (DE)**
• **Well, Michael, Dr.
38159 Vechelde (DE)**
• **Monroy, Victor, Dr.
Charlotte, NC 28270 (US)**

(56) Entgegenhaltungen:
**EP-A- 0 854 170          EP-A- 0 854 171**

**Beschreibung**

Die Erfindung betrifft eine Kautschukmischung, die zumindest eine Kautschukkomponente, zumindest einen Füllstoff, als Füllstoff zumindest ein erstes Gel, das im wesentlichen aus einem zumindest vorvernetzten Kautschuk besteht, eine Partikelgröße von $3 \cdot 10^{-9}$ bis $1 \cdot 10^{-6}$ m und einen Quellungsindex in Toluol von 1 bis 15 besitzt, sowie übliche Zusatzstoffe enthält.

Kautschukmischungen werden für die Herstellung von Gummiprodukten verschiedenster Anwendungen verwendet. Je nach dem Einsatzgebiet werden auch unterschiedliche Anforderungen an die entsprechende Kautschukmischung gestellt. So enthält die Kautschukmischung außer den Kautschukkomponenten weitere Bestandteile wie z. B. Füllstoffe, Alterungsschutzmittel und Vulkanisationsmittel, die wesentlich die Eigenschaften des fertigen Gummiproduktes beeinflussen. Es müssen daher geeignete Systeme Polymer/weitere Bestandteile bereitgestellt werden, um die entsprechenden Eigenschaften des Gummiproduktes zu erhalten. Insbesondere kommt den Füllstoffen in einer Kautschukmischung wesentliche Bedeutung zu. So tragen sie nicht nur zur Verbilligung von Kautschukmischungen bei, sondern wird ihre spezifische Wirkung auf den Kautschuk ausgenutzt. Daher hat es nicht an Versuchen gemangelt z. B. unterschiedlichste Füllstoffe in die Kautschukmischung einzumischen. So sind als Füllstoffe z. B. Ruß und Kieselsäure bekannt. Es konnte beobachtet werden, daß Gummiprodukte, die als Füllstoff z. B. Ruß enthalten eine ausreichende mechanische Belastbarkeit besitzen, jedoch tritt bei Verwendung dieser Mischungen in Reifenlaufstreifen der Nachteil auf, daß die entsprechenden Reifen einen hohen Rollwiderstand und ein schlechtes Naßrutschverhalten zeigen. Dieses Problem wurde dadurch versucht zu lösen, in die Laufstreifenmischung Kieselsäure einzumischen, wobei zur Anbindung der Kieselsäure an das Polymer wiederum ein Füllstoffaktivator erforderlich ist. Allerdings konnte beobachtet werden, daß Gummiprodukte, die als Füllstoff Kieselsäure und als Füllstoffaktivator ein herkömmliches Organosilan (z. B. Bis-3-(triethoxysilylpropyl)tetrasulfid) enthalten, das Hystereseverhalten und die Verstärkung des Gummiproduktes für heutige Anwendungsbereiche unzureichend beeinflussen. So werden insbesondere für die Herstellung von Fahrzeugreifen (z. B. Laufstreifen) Kautschukmischungen gefordert, die im vulkanisierten Zustand dem Reifen einen noch geringeren Rollwiderstand bei weiterhin verbessertem Naßrutschverhalten verleihen. Gleichzeitig sollen andere mechanische Eigenschaften wie z. B. Haltbarkeit möglichst nicht negativ beeinflußt werden.

Aus der EP-A-0 854 170 sind Kautschukmischung mit SBR-Gelen bekannt, deren Vulkanisate Vorteile im Naßrutschverhalten und im Rollwiderstand ergeben sollen. Die EP-A-0 854 171 beschreibt Kautschukgele, deren Oberfläche mit vulkanisationsaktiven schwefelhaltigen Chemikalien modifiziert ist. An der Oberfläche des Gels befinden sich dann schwefelhaltige reaktive Gruppen (u. a. Dithiophosphorsäuregruppen), ), die eine Anbindung an die doppelbindungshaltigen Kautschuke ermöglichen.

Die Aufgabe der hier vorliegenden Erfindung besteht darin Kautschukmischungen bereitzustellen, die im vulkanisierten Zustand ein verbessertes Hystereseverhalten zeigen, so daß z. B. beim Einsatz dieser Kautschukmischungen in Reifen, im Vergleich zu herkömmlichen, der Rollwiderstand verringert und das Naßrutschverhalten verbessert wird. Außerdem soll die Elastomermischung durch die Verwendung eines geeigneten Füllstoffsystems besser verstärkt werden.

Gelöst wird diese Aufgabe erfindungsgemäß dadurch, daß die Oberfläche des zumindest ersten Gels saure oder basische Gruppen aufweist, wobei diese Gruppen nicht durch Reaktion mit Dithiophosphorsäure erzeugt wurden, und die Kautschukmischung weiterhin

a) als weiteren Füllstoff zumindest ein zweites Gel, das im wesentlichen aus einem zumindest vorvernetzten Kautschuk besteht, eine Partikelgröße von $3 \cdot 10^{-9}$ bis $1 \cdot 10^{-6}$ m und einen Quellungsindex in Toluol von 1 bis 15 besitzt, das in der Lage ist, mit den sauren oder basischen Gruppen des ersten Gels eine Neutralisationsreaktion einzugehen,

und/oder

b) als weiteren Zusatzstoff zumindest eine Substanz enthält, die in der Lage ist, mit den sauren oder basischen Gruppen zumindest eines Gels eine Neutralisationsreaktion einzugehen,

wobei die sauren und/oder basischen Gruppen der Gele bzw. des Gels durch Reaktion der Gele bzw. des Gels mit einer ungesättigten Verbindung erzeugt

Durch den Aufbau eines ionischen Netzwerkes in der Elastomermischung, das durch Neutralisationsreaktion der sauren bzw. basischen Gruppen des ersten Gels mit den entsprechenden Gruppen eines zweiten Gels und/oder einer weiteren Substanz gebildet wird, wird ein Füllstoffsystem erzeugt, daß nach der Vulkanisation ein Gummiprodukt für verschiedenste Anwendungen mit guten mechanischen Eigenschaffen z. B. hinsichtlich des Spannungswertes liefert. Außerdem können erfindungsgemäß nunmehr Vulkanisate zur Verfügung gestellt werden, die ausgezeichnete Dämpfungseigenschaften aufweisen, so daß sie insbesondere für den Einsatz in Reifenlaufstreifen aufgrund der Senkung des Rollwiderstandes und gleichzeitiger Verbesserung des Naßrutschverhaltens geeignet sind. Durch die Verwendung der erfindungsgemäßen Kautschukmischung kann z. B. auch auf den Einsatz von Kieselsäure verzichtet werden, wodurch die damit verbundenen Probleme, die z. B. durch die geringe elektrische Leitfähigkeit kieselsäuregefüllter Mischungen auftreten können, vermieden werden.

Das Gel besteht im wesentlichen aus einem Kautschuk, d. h. aus zumindest einer Kautschukkomponente (z. B. NR, BR, SBR, NBR) und gegebenenfalls weiteren Zusatzstoffen, wie z. B. Alterungsschutzmitteln.

Die Herstellung der Polymermatrix des in der Kautschukmischung eingesetzten Gels, an dessen Oberfläche sich saure oder basische Gruppen befinden, kann z. B. auf folgende Weise erfolgen:

1. durch Copolymerisation von zumindest zwei Monomeren z. B. Polymerisation von Butadien mit Methacrylsäure (Acrylsäure)

2. nachträgliche Funktionalisierung eines Polymers (z. B. durch Aufpfropfen) z. B. Styrol-Butadien-Copolymer auf das Acrylsäure oder Vinylpyridin aufgepfropft ist

3. nachträgliche Modifizierung eines Polymeres (z. B. durch Spaltung von Estergruppen) z. B. Polymerisation von Butadien mit Methacrylsäuremethylester und anschließender Hydrolyse

Die Herstellung der Gele erfolgt aus der Latexphase des Polymers und wird im folgenden näher beschrieben:

Nach entsprechender Koagulation des Kautschuklatex der z. B. nach den obengenannten Verfahren 1 bis 3 hergestellt werden kann, wird dieser unter Zugabe eines Vernetzungsmittels (z. B. eines Peroxides (z. B. Dicumylperoxid)) z. B. in einem Autoklaven vernetzt. Es wird soviel Vernetzungsmittel zugegeben, daß der Quellungsindex in Toluol des Gels (anmeldungsgemäß wird Latex, der durch Zugabe eines zusätzlichen Vernetzungsmittels zumindest vorvernetzt wird, als Gel bezeichnet) zwischen ca. 1 bis 15, bevorzugt zwischen 1 und 10, eingestellt wird. Es ist aber auch möglich, die Oberfläche des Latex' nach Einstellung des Quellungsindexes (Herstellung des Gels) nach z. B. den obengenannten Verfahren 2 und 3 mit sauren oder basischen Gruppen zu versehen.

Weiterhin ist es möglich zur Latexphase oder auch zum Gel weitere Zusatzstoffe wie z. B. Alterungsschutzmittel zu geben. Das Gel wird entnommen, abfiltriert, gewaschen und bis zur Gewichtskonstanz getrocknet. Das erhaltene Gel weist eine Partikelgröße von 3 bis 1000 nm (bestimmt nach der Ultrazentrifugationsmethode DIN 53 206) auf. Auch besteht die Möglichkeit den vor- bzw. vernetzten Latex (Gel) gemeinsam mit unvernetzten Latex zu fällen, so daß auf eine extra Isolierung des Gels verzichtet werden kann.

Der Quellungsindex ($Q_i$) der Gele wird aus dem Gewicht des lösungsmittelhaltigen Gels (nach Zentrifugation mit 20000 Upm) und dem Gewicht des trockenen Gels berechnet:

$$Q_i = \text{Naßgewicht des Gels / Trockengewicht des Gels}$$

Zur Ermittlung des Quellungsindex werden z. B. 250 mg Gel in 25 ml Toluol 24 Stunden unter Schütteln quellen gelassen. Das Gel wird abzentrifugiert (mit 20000 Upm) und gewogen (Naßgewicht) und anschließend bei 70 °C bis zur Gewichtskonstanz getrocknet und abermals gewogen (Trockengewicht).

An der Oberfläche der Gele befinden sich saure oder basische Gruppen, wie z. B. -COOH, $-NH_2$, -OH, u. a. die eine Neutralisationsreaktion mit anderen Gelen und/oder Substanzen eingehen können.

Die sauren und/oder basischen Gruppen zumindest eines Gels sind durch Reaktion des Gels mit einer ungesättigten Verbindung erzeugt. Dadurch wird eine einfache Anbindung der sauren bzw. basischen Gruppen an die Oberfläche der Gele ermöglicht.

Die sauren Gruppen auf dem Gel können z. B. durch Reaktion des Gels mit Acrylsäure, Methacrylsäure oder Itakonsäure erzeugt werden. Basische Gruppen können unter den Einsatz von z. B. Vinylpyridin oder Diaminopropylmethacrylamid auf die Oberfläche des Gels aufgebracht werden.

Die Eigenschaftsverbesserungen zeigten sich besonders deutlich, wenn in der Kautschukmischung bezogen auf 100 Teile der Gesamtkautschukmasse 10 bis 110 phr zumindest eines Gels enthalten sind.

Erfindungsgemäß ist in der Kautschukmischung zumindest ein Gel mit sauren oder basischen Gruppen enthalten. Um eine Neutralisationsreaktion eingehen zu können, ist es erforderlich, daß in der Kautschukmischung weiterhin eine Komponente enthalten ist, die einen entsprechenden Reaktionspartner darstellt. Das kann einerseits ein weiteres Gel sein, dessen Oberfläche entsprechend modifiziert ist und andererseits können hierfür extra Substanzen der Kautschukmischung zugemischt werden. Auch ist es möglich, ein oder mehrere verschieden modifizierte Gele mit einer oder mehrerer solcher Substanzen zu kombinieren. Die Menge an zugegebenen weiteren Gelen und/oder Substanz(en) sollte stöchiometrisch zu der Menge des ersten Gels erfolgen.

Als entsprechende Reaktionspartner können als Substanzen z. B. Metallsalze wie z. B. Zinkstearat, Salze der α,β-ungesättigten Carbonsäuren (z. B. Zinksalze oder Magnesiumsalze der Acrylsäure, Methacrylsäure oder Crotonsäure). Weiterhin ist die Verwendung von Metalloxiden wie z. B. Zinkoxid oder Magnesiumoxid möglich.

Des weiteren enthält die erfindungsgemäße Kautschukmischung übliche Zusatzstoffe wie Alterungsschutzmittel (z. B. 6PPD: N-Phenyl-N'-(1,3-dimethylbutyl)-pphenylendiamin oder DTPD: N,N' -Ditoluyl-p-phenylendiamin), Verarbeitungshilfsmittel (z. B. Stearinsäure, Wachse, Fette, Dispergatoren) und Weichmacher (z. B. Phthalsäureester).

Als weitere Füllstoffe, die in der erfindungsgemäßen Kautschukmischung enthalten sein können, werden insbesondere herkömmliche aktive Füllstoffe wie Ruß und Kieselsäure gezählt. Die Ruße können folgende Charakteristika aufweisen: DBP-Zahl (ASTM-D 2414) 90 bis 200 cm$^3$ /100 g und CTAB-Zahl (ASTM-D 3765) von 35 bis 220 m$^2$/g-Die Kieselsäure kann z. B. eine BET-Oberfläche von 145 - 270 m$^2$/g (ASTM D 5604), eine CTAB-Zahl von 120 - 285 m$^2$/g (ASTM D 3765) und ein Porenvolumen von 0,7 -1,7 ml/g (DIN 66133) aufweisen. Als Kieselsäure kann somit z. B. VN3 (Fa. Degussa AG, Deutschland) zum Einsatz kommen. Weiterhin können inaktive Füllstoffe wie z. B. Kreide in der Kautschukmischung enthalten sein. Des weiteren können auch gewisse Anteile von unvernetzten Gelen bzw. Gelen die nicht die entsprechenden Charakteristika aufweisen in der Kautschukmischung enthalten sein. Deren Anteil sollte aber möglichst gering gehalten werden, um die Eigenschaften des Vulkanisates nicht negativ zu beeinflussen.

Zur Vulkanisation der Kautschukmischung können Schwefel bzw. Schwefelspender (z. B.: DTDM-Dimorpholyldisulfid) verwendet werden. Es ist aber auch möglich die Vulkanisation unter Zuhilfenahme anderer Vulkanisationsmittel (z.B. Peroxide, Harze, Strahlung) ablaufen zu lassen. Außerdem werden vulkanisationsbeeinflussende Stoffe wie Beschleuniger oder Aktivatoren für die entsprechende Vulkanisationsart (z. B. für die Schwefelvulkanisation - z. B. CBS: Benzothiazyl-2-cyclohexylsulfenamid, TMTD: Tetramethylthiuramdisulfid, TBBS: Benzothiazyl-2-tert.-butylsulfenamid) der Kautschukmischung zugesetzt.

Die erfindungsgemäße Kautschukmischung enthält als Kautschukkomponente zumindest ein Polymer ausgewählt bevorzugt aus Naturkautschuk oder cis-Polyisopren mit einem cis-1,4-Anteil > 90 mol% oder Styrol-Butadien-Copolymer oder Polybutadien oder Mischungen hieraus.

Das Polyisopren kann durch stereospezifische Polymerisation in Lösung mit Ziegler-Natta-Katalysatoren (z. B. TiCl$_4$/Al(Alkyl)$_3$) oder unter Verwendung von fein verteiltem Lithiumalkylen (z. B. n-Butyllithium) erhalten werden. Bevorzugte Styrol-Butadien-Copolymere sind solche mit Gehalten an einpolymerisiertem Styrol von 18 bis 60, vorzugsweise 20 bis 50 Gew.%. Lösungs- oder Emulsionspolymerisate sind bevorzugt.

Für die erfindungsgemäße Kautschukmischung soll weiterhin Polybutadien bevorzugt verwendet werden. Dabei ist es unerheblich nach welchen Verfahren dieses hergestellt worden ist.

Weiterhin kann die erfindungsgemäße Kautschukmischung ein oder mehrere aus dem Stand der Technik bekannte Kautschukkomponenten enthalten, z. B. folgende: Butylkautschuk (IIR), Acrylnitril-Butadien-Copolymer (NBR), hydriertes Acrylnitril-Butadien-Copolymer (HNBR), Ethylen Ethylen-Propylen-Copolymer (EPM), Ethylen-Propylen-Dien-Terpolymer (EPDM).

Die Herstellung der erfindungsgemäßen Kautschukmischung kann auf unterschiedliche Weise erfolgen. So ist es möglich, das Gel in einem Masterbatch mit einer oder mehreren Kautschukkomponenten und gegebenenfalls weiteren üblichen Zusatzstoffen in einer ersten Mischstufe in das Mischaggregat zu geben. In einer zweiten Mischstufe können dann weitere Füllstoff zusammen mit einer eventuellen Substanz, die saure oder basische Gruppen aufweist und wiederum gegebenenfalls weiteren üblichen Zusatzstoffen in die Grundmischung gegeben werden. Es ist aber auch möglich, die Reihenfolge der Zugabe des Gels, der Füllstoff und der Substanz zu vertauschen. Nach der Fertigstellung der Grundmischung werden zu dieser nach einer eventuellen Zwischenlagerung die Vulkanisationsbestandteile gegeben und somit die Fertigmischung hergestellt. Nach der Formung eines Rohlings wird dieser der Vulkanisation unterzogen.

Wie bereits erwähnt, kann die erfindungsgemäße Kautschukmischung für die Herstellung von beanspruchten Gummiartikeln verwendet werden. Dazu zählen z. B. Luftfedern, Fördergurte, Riemen u. ä.

Besonders bevorzugt ist, wenn die erfindungsgemäße Kautschukmischung für die Herstellung von Bauteilen von Fahrzeugreifen Anwendung findet. So können z. B. Seitenwände, Verstärkungsschichten u. a. daraus hergestellt werden. Wiederum bevorzugt ist, wenn der Laufstreifen eines Fahrzeugreifens, insbesondere Fahrzeugluftreifen, aus der erfindungsgemäßen Kautschukmischung gefertigt wird. Dabei kann der Laufstreifen einteilig oder mehrteilig (Cap- und Base-Aufbau) aufgebaut sein. Besonders bei Verwendung der Kautschukmischung für den Laufstreifenteil, der mit der Fahrbahn in Berührung kommt (Cap), wirkt sich die erfindungsgemäße Kautschukmischung zusätzlich vorteilhaft auf den Rollwiderstand und das Naßrutschverhalten aus. Ansonsten weisen die Fahrzeugluftreifen einen herkömmlichen Aufbau hinsichtlich Konstruktion und Mischungszusammensetzung auf.

Anhand des folgenden Ausführungsbeispiels soll die Erfindung näher erläutert werden:

**KA 8650/37: 50%iger NR-Masterbatch mit Gel A**

KA 8650/37 ist ein 50%iger NR-Masterbatch, der Gel A enthält.

Gel A wird ausgehend von Baystal 1357/3 der Polymer Latex GmbH (Port Jérôme) durch Nachvernetzung mit 1,5 phr Dicumylperoxid (DCP) und durch anschließende Carboxylierung mit 15 phr Acrylsäure hergestellt.

Baystal 1357/3 der Polymer Latex GmbH ist ein nichtcarboxylierter SBR-Latex mit einem Styrolgehalt von 22 Gew.%, einem Feststoffgehalt von 38 Gew.% und einem pH von 10,2. Die Latexteilchen haben einen Durchmesser von $d_{10}$= 52 nm, $d_{50}$= 58 nm und $d_{80}$= 63 nm. Die Dichte der Latexteilchen beträgt 0,9329 g/cm$^3$. Der Gelgehalt des

aus dem Latex isolierten Polymers beträgt 76 Gew.%, der Quellungsindex des vergelten Polymeranteils beträgt 57 (Naßgewicht/Trockengewicht in Toluol) und die Glastemperatur des SBRs liegt bei -58 °C.

Für die Nachvemetzung mit Dicumylperoxid (DCP) wird der Latex auf eine Feststoffkonzentration von 30 Gew.% verdünnt und in einen Autoklaven gefüllt. DCP wird in fester Form bei Raumtemperatur zugegeben (1,5 phr) bezogen auf Festprodukt). Durch Aufheizen des Latex auf 60 °C wird das DCP aufgeschmolzen und unter Rühren gut im Latex verteilt. Zur Entfernung von Sauerstoff wird der Reaktorinhalt bei 60 °C unter Rühren evakuiert und Stickstoff aufgepreßt. Der Evakuierungs/$N_2$-Begasungszyklus wird 3 mal wiederholt. Danach wird der Reaktor auf 150 °C aufgeheizt. Nach dem Aufheizen wird die Innentemperatur 45 Min. bei mindestens 150 °C gehalten. Danach wird das entstandene Gel abgekühlt und über ein Monodurtuch filtriert.

Nach der Vernetzung mit DCP beträgt der pH - Wert des Gels 9,5. Die Teilchengröße und die Teilchengrößeverteilung der Gelpartikel wird durch die Nachvernetzung praktisch nicht beeinflußt; die Dichte der Gelpartikel steigt auf 0,9776 g/cm$^3$; der Gelgehalt des aus dem Latex isolierten Polymers nimmt auf 97,4 Gew.% und der Quellungsindex des vergelten Polymeranteils auf 5,7 (Naßgewicht/Trockengewicht in Toluol) zu; die Glastemperatur nimmt auf -25 °C zu.

Die Carboxylierung des nachvernetzten SBR-Latex (Gels) wird folgendermaßen durchgeführt:

Man legt den mit 1,5 phr Dicumylperoxid vemetzten Latex (Gel) in einem 3-Hals-Kolben vor und versetzt dieses Gel bei Raumtemperatur zuerst mit 1 Gew.% bez. auf Latexfeststoff einer 3,2 %igen wässrigen Lösung von *Mersolat K 30* (Na-Salz eines Alkylsulfonats der Bayer AG, Leverkusen, Deutschland). Vor der Zugabe der Acrylsäure verdünnt man das Gel mit Wasser, so daß der theoretische Endfeststoffgehalt des Gels bei quantitativen Acrylsäureumsatz 20 Gew.% beträgt. Nach dem Zusatz von 15 phr bezogen auf den Gelfeststoffgehalt einer 99,8 %igen Acrylsäure (Fa. Interorgana Köln, Deutschland) und der Zugabe von 0,6 phr 50 %igem p-Menthanhydroperoxid (*Triganox NT 50* der Akzo Chemie, Arnheim, Niederlande) erhitzt man die Reaktionsmischung auf 70 °C und gibt innerhalb von 15 Min. 0,3 Gew.% bez. auf Gelfeststoff einer wässrigen 1,5 Gew.%igen Kaliumperoxodisulfat-Lösung zu. Nach einer Reaktionszeit von 3 h bei 70 °C hat das Gel einen Polymerisationsumsatz von ca. 95 %. Der pH-Wert des Gels beträgt 3,6. Die Dichte der Gelteilchen beträgt 1,0216 g/cm$^3$. Der Gelgehalt des isolierten Polymers beträgt 97 Gew.% (Bestimmung in Toluol bei Raumtemperatur) und der Quellungsindex des vergelten Anteils beträgt 3,4 (Naßgewicht/Trokkengewicht in Toluol). Die Säurezahl des Polymers beträgt 31 mg KOH/g Polymer und die Glastemperatur des Polymeren bleibt nahezu unverändert bei -26 °C.

Um eine gute Verteilung der Gele in der späteren Kautschukmatrix sicherzustellen, wird das carboxylierte Gel als NR-Masterbatch aufgearbeitet, wobei ein NR/Gel-Gewichts-Verhältnis von 50/50 eingestellt wird.

Als NR-Masterbatchkomponente wird *Taytex* mit einer Feststoffkonzentration von 61 Gew.% (Importeur: Theodor Durrieu, Hamburg, Deutschland) verwendet

Vor dem Mischen des NR-Latex's mit dem carboxylierten Gel wird der NR-Latex durch Zugabe von 5 Gew. % bez. auf den NR-Latex mit 5%iger *Dresinate 731*-Lösung (Natriumsalz der disproportionierten Abietinsäure der Fa. Hercules, Wilmington, USA) versetzt. Danach mischt man den NR- Latex und das carboxylierte Gel 10 Min. unter intensivem Rühren bei Raumtemperatur.

Nach der Herstellung der NR-Latex/Gelmischung wird eine Alterungsschutzmitteldispersion zugegeben. Hierfür wird eine 10 %ige wässrige Dispersion eines aminischen Alterungsschutzmittels verwendet. Zur Stabilisierung von 1 kg Festprodukt verwendet man: 50 g einer Dispersion aus *Vulkanox 4020 (N*-Isopropyl-N'-phenyt-p-phenylen-diamin/ Bayer AG, Leverkusen, Deutschland) 0,0913 g NaOH und 0,45 g *Emulgator T 11* (teilhydrierte Talgfettsäure/Procter & Gamble, Cincinnati, USA) und 0,193 g *Oulu GP 331* (unmodifizierte Harzsäure/Veitsiluto, Oulu, Finnland).

Zur Koagulation wird die stabilisierte NR-Latex/Gelmischung in eine auf 60 °C erhitzte Elektrolytlösung eingerührt, wobei zur Koagulation von 1kg Festprodukt vorgelegt werden:

Elektrolytlösung aus 10 l Wasser; 75 g Kochsalz; 13,6 g Al-Sulfat-18 Kristallwasser; 1,5 g Gelatine.

Während der Koagulation wird der pH-Wert mit 10 %iger Schwefelsäure bei pH = 4,0 gehalten.

Das Produkt wird abfiltriert und mit ca. 40 l Lewatitwasser nachgewaschen und bei 70 °C im Vakuumtrockenschrank bis zur Gewichtskonstanz getrocknet.

### KA 8650/32: 50 %iger NR-Masterbatch mit Gel B

KA 8650/32 ist ein 50 %iger NR-Masterbatch, der das Gel B enthält.

Gel B wird ausgehend von Baystal 1357/4 der Polymer Latex GmbH (Port Jérôme) durch Nachvernetzung mit 1,5 phr Dicumylperoxid (DCP) und durch anschließende Pfropfung des nachvernetzten Latex mit 20 phr 4-Vinylpyridin hergestellt.

Baystal 1357/4 der Polymer Latex GmbH (Port Jérôme) ist ein nichtcarboxylierter SBR-Latex mit einem Styrolgehalt von 22 Gew.%, einem Feststoffgehalt von 38 Gew.% und einem pH - Wert von 10,3. Die Latexteilchen haben einen Durchmesser von $d_{10}$= 50 nm, $d_{50}$= 56 nm und $d_{80}$= 60 nm. Die Dichte der Latexteilchen beträgt 0,9281 g/cm$^3$. Der Gelgehalt beträgt 75 Gew.% und der Quellungsindex des vergelten Anteils beträgt 61 (Naßgewicht/Trockengewicht in Toluol). Die Glastemperatur des SBRs liegt bei -57 °C.

Die Nachvernetzung mit Dicumylperoxid wird wie bei KA 8650/37 beschrieben durchgeführt.

Die Modifikation des nachvernetzten SBR-Latex (Gels) mit Vinylpyridin wird folgendermaßen durchgeführt:

Man legt den mit 1,5 phr Dicumylperoxid vernetzten Latex (Gel) in einem 3-Hals-Kolben vor und versetzt das Gel bei Raumtemperatur zuerst mit 1 Gew.% bez. auf den Gelfeststoff mit einer 2,85 %igen wässrigen Lösung von *Mersolat K 30* (Na-Salz eines Alkylsulfonats der Bayer AG, Leverkusen, Deutschland). Vor der Zugabe des Vinylpyridins verdünnt man das Gel mit Wasser, so daß der theoretische Endfeststoffgehalt des Gels bei quantitativen Vinylpyridinumsatz 20 Gew.% beträgt. Nach dem Zusatz von 20 phr bezogen auf den Gelfeststoffgehalt von 95 %igem 4-Vinylpyridin (Aldrich-Chemie, Steinheim, Deutschland) und der Zugabe von 0,6 phr 50 %igem p-Menthanhydroperoxid (*Triganox NT 50* der Akzo Chemie, Arnheim, Niederlande) erhitzt man die Reaktionsmischung auf 70 °C und gibt innerhalb von 15 Min. 0,5 Gew.% bez. auf Gelfeststoff einer wässrigen 1,5 Gew.%igen Kaliumperoxidisulfat-Lösung zu und erhitzt den Reaktorinhalt auf 90 °C. Nach ca. 1 h bei 90 °C ist der Polymerisationsumsatz nahezu quantitativ.

Der pH-Wert des Gels beträgt 8,7. Die Gelpartikel haben einen Durchmesser von $d_{10}$= 63 nm, $d_{50}$= 95 nm und $d_{80}$= 129 nm. Die Dichte der Gelpartikel beträgt 1,0088 g/cm$^3$. Der Gelgehalt des isolierten Polymers beträgt 98 Gew.% (Bestimmung in Toluol bei Raumtemperatur) und der Quellungsindex des vergelten Anteils beträgt 4,2 (Naßgewicht/Trockengewicht in Toluol); die Glastemperatur des Polymeren beträgt: -24 °C und der elementaranalytisch bestimmte N-Gehalt beträgt 2,1 Gew.%.

Der mit Dicumylperoxid nachvemetzte und mit 20 phr 4-Vinylpyridin bepfropfte SBR-Latex (Gel) wird wie im Falle von KA 8650/37 (siehe oben) als 50 %iger NR-Masterbatch aufgearbeitet.

In der folgenden Tabelle 1 wurde eine Kautschukmischung auf herkömmliche Art und Weise hergestellt.

Tabelle 1

| | Referenz - Stand der Technik [phr] | Referenz [phr] | Erfindung [phr] | Erfindung [phr] |
|---|---|---|---|---|
| **Bestandteile** | **1** | **2** | **3** | **4** |
| Naturkautschuk | 100 | 50 | 50 | 50 |
| Ruß N121 | 50 | 25 | 25 | 25 |
| **Gel B** | - | **100** | - | **50** |
| **Gel A** | - | - | **100** | **50** |
| Alterungsschutzmittel 6PPD | 1,5 | 1,5 | 1,5 | 1,5 |
| Zinkoxid | 3 | - | 10 | 10 |
| Stearinsäure | 2 2 2 2 | | | |
| Schwefel | 1,8 | 1,8 | 1,8 | 1,8 |
| Beschleuniger TBBS | 1 | 1 | 1 | 1 |

Die Einheit phr bezieht sich auf 100 Teile des Gewichtes der gesamten Kautschukkomponente. (Die Gele lagen in einem 50:50 - Masterbatch in Naturkautschuk vor.)

Die Kautschukmischung wurde bei 150 °C 30 min vulkanisiert.

Tabelle 2

| | Referenz- Stand der Technik | Referenz | Erfindung | Erfindung |
|---|---|---|---|---|
| **Eigenschaften** | **1** | **2** | **3** | **4** |
| Reißfestigkeit [MPa] DIN 53504 | 24,6 | 15,3 | 20,4 | 20,7 |
| Bruchdehnung [%] DIN 53504 | 550 | 513 | 454 | 460 |
| Spannungswert 100% [MPa] DIN 53504 | 1,98 | 2,06 | 2,93 | 2,42 |

Tabelle 2   (fortgesetzt)

| | Referenz- Stand der Technik | Referenz | Erfindung | Erfindung |
|---|---|---|---|---|
| Eigenschaften | 1 | 2 | 3 | 4 |
| Spannungswert 300 % [MPa] DIN 53504 | 11,77 | 7,59 | 13,57 | 11,82 |
| Härte [Shore A] DIN 53505 | 60 | 67 | 68 | 65 |
| Tan δ 0°C DIN 53512 | 0,1454 (100 %) | Nicht gemessen | 0,2056 (141 %) | 0,2059 (142 %) |
| Tan δ 60°C DIN 53512 | 0,1308 (100 %) | Nicht gemessen | 0,1100 (119 %) | 0,1160 (113 %) |

Aus der Tabelle 2 geht hervor, daß herkömmliche Mischungen ohne Gele (Referenz 1) zwar eine hinreichend gute mechanische Beständigkeit aufweisen, jedoch für die Verwendung in Reifenlaufstreifen aufgrund eines schlechten Naßrutschverhalten (geringe Tanδ 0 °C-Werte) und eines hohen Rollwiderstandes (hohe Tanδ 60 °C-Werte) nur unzureichend geeignet sind.

Werden nur modifizierte Gele, d.h. Gele, deren Oberfläche z. B. basische Zentren aufweisen, eingemischt (Referenz 2), konnten keine wesentlichen Verbesserungen in der mechanischen Haltbarkeit, insbesondere im Spannungswert, des Vulkanisates beobachtet werden.

Werden modifizierte Gele in Kombination mit einem entsprechenden Gel und/oder Substanz der Mischung zugesetzt (Erfindung 3 und 4) konnte der Spannungswert des Vulkanisates angehoben werden. Der Spannungswert gibt eine Aussage über die Steifigkeit des vulkanisierten Produktes. Wenn diese Kautschukmischungen (Erfindungen 3 und 4) zur Herstellung von Laufstreifen für Fahrzeugreifen verwendet werden, bedeutet das eine erhöhte Steifigkeit z. B. der Profilklotzflanken, was zu einer besseren Traktion führt. Aus den Tanδ - Werten geht hervor, daß die erfindungsgemäße Mischungen 3 und 4 zumindest im Vergleich zur Referenz 1 ein besseres Naßrutschverhalten zeigen bei gleichzeitig verringertem Rollwiderstand. Es können also insbesondere Fahrzeugluftreifen bereitgestellt werden, die bei optimalen Dämpfungseigenschaften erhöhte Spannungswerte aufweisen, wobei dadurch der Fahrkomfort, die Traktion und die Lebensdauer des Reifens verbessert wird.


**Patentansprüche**

1.   Kautschukmischung, die zumindest eine Kautschukkomponente, zumindest einen Füllstoff, als Füllstoff zumindest ein erstes Gel, das im wesentlichen aus einem zumindest vorvernetzten Kautschuk besteht, eine Partikelgröße von $3 \cdot 10^{-9}$ bis $1 \cdot 10^{-6}$ m und einen Quellungsindex in Toluol von 1 bis 15 besitzt, sowie übliche Zusatzstoffe enthält, **dadurch gekennzeichnet, daß** die Oberfläche des zumindest ersten Gels saure oder basische Gruppen aufweist, wobei diese Gruppen nicht durch Reaktion mit Dithiophosphorsäure erzeugt wurden, und die Kautschukmischung weiterhin

   a) als weiteren Füllstoff zumindest ein zweites Gel, das im wesentlichen aus einem zumindest vorvernetzten Kautschuk besteht, eine Partikelgröße von $3 \cdot 10^{-9}$ bis $1 \cdot 10^{-6}$m und einen Quellungsindex in Toluol von 1 bis 15 besitzt, das in der Lage ist, mit den sauren oder basischen Gruppen des ersten Gels eine Neutralisationsreaktion einzugehen,
   und/oder
   b) als weiteren Zusatzstoff zumindest eine Substanz enthält, die in der Lage ist, mit den sauren oder basischen Gruppen zumindest eines Gels eine Neutralisationsreaktion einzugehen,

   wobei die sauren und/oder basischen Gruppen der Gele bzw. des Gels durch Reaktion der Gele bzw. des Gels mit einer ungesättigten Verbindung erzeugt sind.

2.   Kautschukmischung nach zumindest einem der vorhergehenden Ansprüche, **dadurch gekennzeichnet, daß** die Oberfläche zumindest eines Gels Carboxylgruppen aufweist.

3.   Kautschukmischung nach zumindest einem der vorhergehenden Ansprüche, **dadurch gekennzeichnet, daß** die Oberfläche zumindest eines Gels Hydroxylgruppen aufweist.

4. Kautschukmischung nach zumindest einem der vorhergehenden Ansprüche, **dadurch gekennzeichnet, daß** die Oberfläche zumindest eines Gels Aminogruppen aufweist.

5. Kautschukmischung nach zumindest einem der vorhergehenden Ansprüche, **dadurch gekennzeichnet, daß** die Substanz ein Metallsalz oder ein Metalloxid ist.

6. Kautschukmischung nach Anspruch 6, **dadurch gekennzeichnet, daß** das Metallsalz Zinkstearat ist.

7. Kautschukmischung nach Anspruch 6, **dadurch gekennzeichnet, daß** das Metalloxid ausgewählt ist aus Magnesiumoxid und/oder Zinkoxid.

8. Kautschukmischung nach zumindest einem der vorhergehenden Ansprüche, **dadurch gekennzeichnet, daß** in der Kautschukmischung, bezogen auf 100 Teile des Gewichtes der gesamten Kautschukomponenten, 10 bis 110 phr zumindest eines Geles enthalten sind.

9. Kautschukmischung nach zumindest einem der vorhergehenden Ansprüche, **dadurch gekennzeichnet, daß** die Kautschukkomponente ausgewählt ist aus Naturkautschuk und/oder synthetisches Polyisopren und/oder Styrol-Butadien-Copolymer und/oder Polybutadien.

10. Verwendung der Kautschukmischung nach zumindest einem der vorhergehenden Ansprüche für die Herstellung von Fahrzeugluftreifen, insbesondere für deren Laufstreifen.

**Claims**

1. Rubber mixture, which contains at least one rubber component, at least one filler, at least one first gel as the filler, which substantially comprises an at least previously cross-linked rubber and has a particle size of $3 \cdot 10^{-9}$ to $1 \cdot 10^{-6}$ m and a swelling index in toluene of 1 to 15, as well as conventional additives, **characterised in that** the surface of at least the first gel has acidic or basic groups, these groups not having been produced by a reaction with dithiophosphoric acid, and furthermore the rubber mixture

   a) has, as the additional filler, at least one second gel which substantially comprises an at least previously cross-linked rubber and has a particle size of $3 \cdot 10^{-9}$ to $1 \cdot 10^{-6}$ m and a swelling index in toluene of 1 to 15, and which second gel is capable of effecting a neutralisation reaction with the acidic or basic groups of the first gel, and/or
   b) contains, as the further additive, at least one substance which is capable of effecting a neutralisation reaction with the acidic or basic groups of at least one gel,

   the acidic and/or basic groups of the gels or respectively of the gel being produced by a reaction of the gels or respectively of the gel with an unsaturated compound.

2. Rubber mixture according to claim 1, **characterised in that** the surface of at least one gel has carboxyl groups.

3. Rubber mixture according to at least one of the preceding claims, **characterised in that** the surface of at least one gel has hydroxyl groups.

4. Rubber mixture according to at least one of the preceding claims, **characterised in that** the surface of at least one gel has amino groups.

5. Rubber mixture according to at least one of the preceding claims, **characterised in that** the substance is a metal salt or a metal oxide.

6. Rubber mixture according to claim 5, **characterised in that** the metal salt is zinc stearate.

7. Rubber mixture according to claim 6, **characterised in that** the metal oxide is selected from magnesium oxide and/or zinc oxide.

8. Rubber mixture according to at least one of the preceding claims, **characterised in that** 10 to 110 phr of at least one gel are contained in the rubber mixture, relative to 100 parts of the weight of the entire rubber component.

9. Rubber mixture according to at least one of the preceding claims, **characterised in that** the rubber component is selected from natural rubber and/or synthetic polyisoprene and/or styrene-butadiene copolymer and/or polybutadiene.

10. Use of the rubber mixture according to at least one of the preceding claims for the manufacture of pneumatic vehicle tyres, more especially for the tread strips thereof.

## Revendications

1. Composition de caoutchouc contenant au moins un composant de caoutchouc, au moins une charge, comme charge au moins un premier gel essentiellement constitué d'un caoutchouc au moins préréticulé et présentant une dimension de particule comprise entre $3 \times 10^{-9}$ et $1 \times 10^{-6}$ m et un indice de gonflement dans le toluène compris entre 1 et 15, ainsi que des additifs usuels, **caractérisée en ce que** la surface au moins du premier gel au moins présente des groupes acides ou basiques, ces groupes n'ayant pas été formés par réaction avec l'acide dithiophosphorique et **en ce que** la composition de caoutchouc contient, en outre,

    a) comme autre charge au moins un deuxième gel, essentiellement constitué d'un caoutchouc au moins préréticulé, présentant une dimension de particule comprise entre $3 \times 10^{-9}$ et $1 \times 10^{-6}$ m et un indice de gonflement dans le toluène compris entre 1 et 15, et étant en mesure d'engendrer avec les groupes acides ou basiques du premier gel une réaction de neutralisation
    et/ou
    b) comme autre additif au moins une substance en mesure d'engendrer avec les groupes acides ou basiques d'au moins un gel une réaction de neutralisation,

    les groupes acides et/ou basiques des gels ou du gel étant formés par réaction des gels ou du gel avec un composé insaturé.

2. Composition de caoutchouc selon au moins une des revendications précédentes, **caractérisée en ce que** la surface d'au moins un gel présente des groupes carboxyliques.

3. Composition de caoutchouc selon au moins l'une des revendications précédentes, **caractérisée en ce que** la surface d'au moins un gel présente des groupes hydroxyle.

4. Composition de caoutchouc selon au moins l'une des revendications précédentes, **caractérisée en ce que** la surface d'au moins un gel présente des groupes aminés.

5. Composition de caoutchouc selon au moins l'une des revendications précédentes, **caractérisée en ce que** la substance est un sel métallique ou un oxyde métallique.

6. Composition de caoutchouc selon au moins la revendication 5, **caractérisée en ce que** le sel métallique est le stéarate de zinc.

7. Composition de caoutchouc selon au moins la revendication 6, **caractérisée en ce que** le sel métallique est choisi parmi l'oxyde de magnésium et/ou l'oxyde de zinc.

8. Composition de caoutchouc selon au moins l'une des revendications précédentes, **caractérisée en ce que** sont contenus dans la composition de caoutchouc, rapporté à 100 parties en poids de l'ensemble des composants de caoutchouc, 10 à 110 phr d'au moins un gel.

9. Composition de caoutchouc selon au moins l'une des revendications précédentes, **caractérisée en ce que** le composant de caoutchouc est choisi parmi le caoutchouc naturel et/ou le polyisoprène synthétique et/ou un copolymère de styrène-butadiène et/ou le polybutadiène.

10. Utilisation de la composition de caoutchouc selon au moins l'une des revendications précédentes pour la fabrication de pneumatiques pour véhicules, en particulier pour leurs bandes de roulement.